# EUROPEAN PATENT SPECIFICATION

(11) **EP 4 530 200 B1**
(45) Date of publication and mention of the grant of the patent: **03.06.2026**
(21) Application number: 24202045.1
(22) Date of filing: 23.09.2024
(51) Int. Cl.: B64D 41/00

(54) **RAM AIR TURBINE STOW ACTUATION CONTROL**
STAULUFTTURBINEN-STAUBETÄTIGUNGSSTEUERUNG
COMMANDE D'ACTIONNEMENT DE RANGEMENT DE TURBINE À AIR DYNAMIQUE

(30) Priority: 29.09.2023 IN 202311065719
(43) Date of publication of application: 02.04.2025
(73) Proprietor: Hamilton Sundstrand Corporation, Charlotte, NC 28217-4578 (US)
(72) Inventor: HEDGE, Anasooya, Bangalore (IN); KUMAR, Atul, Bangalore (OM)
(74) Representative: Dehns

(56) References cited:
- EP-A1- 3 284 679
- EP-A1- 3 865 407
- US-A1- 2007 237 640
- BESING W: "HYDRAULISCHE SYSTEME IN MODERNEN ZIVILEN TRANSPORTFLUGZEUGEN", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, vol. 37, no. 6, 30 June 1993 (1993-06-30), pages 502 - 508, XP000380882, ISSN: 0341-2660

## Description

### CROSS-REFERENCE TO RELATED APPLICATIONS

This application claims the benefit of India Provisional Application No. 202311065719 filed September 29, 2023.

### BACKGROUND

The present disclosure relates to ram air turbine systems, and in particular to stowing of the ram air turbine in the fuselage of an aircraft after previous deployment of the ram air turbine.

In general, ram air turbine ("RAT") systems are aircraft emergency power systems used to provide emergency electrical and/or hydraulic power to aircraft in the case of loss of both primary and secondary power sources for the aircraft. System operation can require the RAT to transition from a stowed position internal to the aircraft fuselage to a deployed position external to the aircraft fuselage. The RAT may deploy automatically in an engine failure event, or when commanded by the aircraft flight crew. Additionally, the RAT may be deployed on the ground when the system is periodically tested by maintenance personnel. The RAT typically deploys vis a springloaded lever and cannot be returned to the stowed position during aircraft flight. A stow mechanism is located in the fuselage and is connected to the RAT, and is activated by a switch mechanism mounted in the fuselage. BESING W, O & P - OELHYDRALTLIK UND PNEUMATIK: ZEITSCHRIFT FUER FLUIDTECHNIK, AKTORIK, STEUERELEKTRONIK DU SENSORIK, VEREINIGTE FACHVERLAGE GMBH, DE, vol. 37, no. 6, 1 June 1993, pages 502-508, XP 000380882. ISSN: 0341-2660 describes HYDRAULISCHE SYSTEME IN MODERNEN ZIVILEN TRANSPORTFLUGZEUGEN' and discloses a ram air turbine system with a stow panel installed in the aircraft fuselage, which can be operated by maintenance personnel in order to retract the ram air turbine.

### BRIEF DESCRIPTION

In one exemplary embodiment, a ram air turbine system of an aircraft includes a ram air turbine selectably movable between a stowed position and an extended position at an aircraft, and a retraction mechanism operably connected to the ram air turbine and configured to selectably move the ram air turbine from the extended position toward the stowed position. A stow panel is separate from the aircraft and is selectably connectible to the retraction mechanism. The stow panel is configured to signal the retraction mechanism to initiate movement of the ram air turbine from the extended position.

Additionally or alternatively, in this or other embodiments the system includes a stow connector through which the stow panel is selectably connectible to the retraction mechanism. The stow connector includes an aircraft connector portion positioned at the aircraft, and a panel connector portion positioned at the stow panel and operably connectible to the aircraft connector portion.

Additionally or alternatively, in this or other embodiments the aircraft connector portion is operably connected to the retraction mechanism via a retraction lead.

Additionally or alternatively, in this or other embodiments the aircraft connector portion is located at one of an exterior surface of an aircraft fuselage or a fuselage pocket of the aircraft fuselage.

Additionally or alternatively, in this or other embodiments a connector cover is removably positioned over the aircraft connector portion.

Additionally or alternatively, in this or other embodiments the connector cover is attached to an aircraft structure using one of a cable, a string or a strap.

Additionally or alternatively, in this or other embodiments the signal is one of an electrical signal, an optical signal, or a hydraulic signal.

Additionally or alternatively, in this or other embodiments the stow panel includes at least a signal transmitter, and a switch operably connected to the signal transmitter such that when the switch is activated the signal transmitter transmits the signal.

Additionally or alternatively, in this or other embodiments the stow panel further includes a power source operably connected to the switch and the signal transmitter.

Additionally or alternatively, in this or other embodiments the ram air turbine is configured to be moved from the extended position to the stowed position.

In another exemplary embodiment, an aircraft includes an aircraft fuselage, and the ram air turbine system is located at the aircraft fuselage and selectably movable between a stowed position and an extended position, and a retraction mechanism operably connected to the ram air turbine and configured to selectably move the ram air turbine from the extended position toward the stowed position. An aircraft connector portion is located at the aircraft fuselage and is configured to be selectably connectible to a stow panel separate from the aircraft.

Additionally or alternatively, in this or other embodiments the aircraft connector portion is operably connected to the retraction mechanism via a retraction lead.

Additionally or alternatively, in this or other embodiments the aircraft connector portion is positioned at one or an exterior surface of an aircraft fuselage or a fuselage pocket of the aircraft fuselage.

Additionally or alternatively, in this or other embodiments the retraction mechanism is configured to receive a signal from the stow panel via the aircraft connector portion to initiate movement of the ram air turbine from the extended position.

Additionally or alternatively, in this or other embodiments the signal is one of an electrical signal, an optical signal, or a hydraulic signal.

Additionally or alternatively, in this or other embodiments a connector cover is removably positioned over the aircraft connector portion.

Additionally or alternatively, in this or other embodiments the connector cover is attached to an aircraft structure using one of a cable, a string or a strap.

In yet another exemplary embodiment, a method of operating a ram air turbine system of an aircraft includes connecting a stow panel separate from the aircraft to a retraction mechanism located at the aircraft and operably connected to the ram air turbine, transmitting a signal from the stow panel to the retraction mechanism via the connection, and initiating operation of the retraction mechanism in response to receiving the signal to retract the ram air turbine from the extended position toward the stowed position.

Additionally or alternatively, in this or other embodiments the stow panel is removed from connection with the retraction mechanism after the ram air turbine reaches the stowed position.

Additionally or alternatively, in this or other embodiments the signal is transmitted by activation of a switch at the stow panel.

### BRIEF DESCRIPTION OF THE DRAWINGS

The following descriptions should not be considered limiting in any way. With reference to the accompanying drawings, like elements are numbered alike:
FIG. 1 is a schematic illustration of an exemplary embodiment of a ram air turbine (RAT);
FIG. 2 is a schematic illustration of an exemplary embodiment of an aircraft;
FIG. 3 is a schematic illustration of an exemplary embodiment of a RAT stow panel connection to an aircraft;
FIG. 4 is a schematic illustration of another exemplary embodiment of a RAT stow panel connection to an aircraft; and
FIG. 5 illustrates an exemplary method of retracting a RAT.

### DETAILED DESCRIPTION

A detailed description of one or more embodiments of the disclosed apparatus and method are presented herein by way of exemplification and not limitation with reference to the figures.

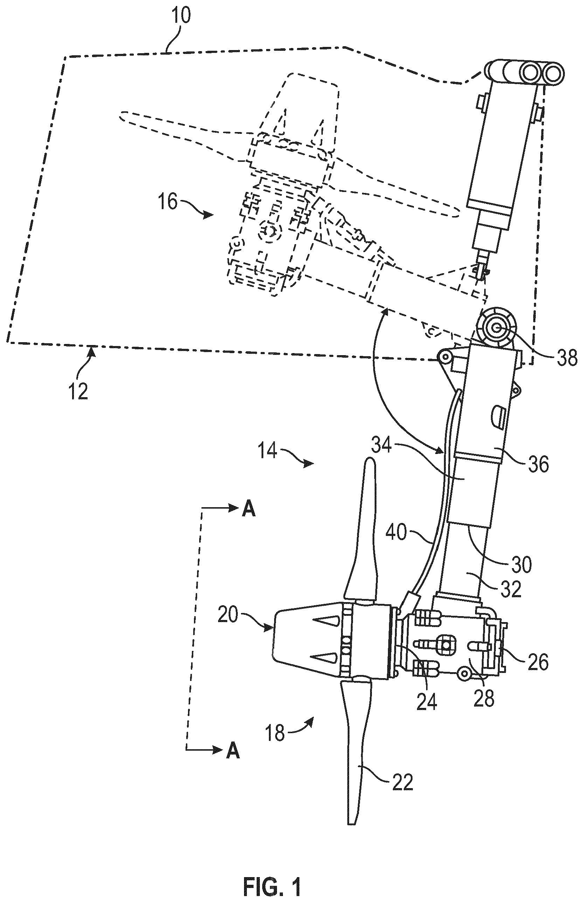

Referring now to FIG. 1, an exemplary ram air turbine (RAT) assembly 14 is illustrated. The aircraft 10 schematically shown in FIG. 1 includes an opening or a hatch 12 through which the RAT assembly 14 moves from a stowed position 16 to a deployed position 18. The RAT assembly 14 includes a turbine 20 having at least one turbine blade 22 that rotates about a turbine driveshaft 24. The turbine driveshaft 24 is coupled to a lower gear box 28 adjacent a first end 26. In the stowed position, illustrated using phantom lines, the RAT assembly 14 is disposed within the aircraft structure 10 and the turbine blades 22 are fixed in a desired orientation to prevent contact with the surrounding structure. The desired orientation of the turbine blades 22 provides for movement of the RAT assembly 14 through the opening of the aircraft structure 10.

The RAT assembly 14 also includes a strut 30 connected at a first end 32 to the turbine 20 adjacent the lower gear box 28, and coupled at a second, opposite end 34 to a generator housing 36. The generator housing 36, and therefore the strut 30 and turbine 20, is supported on the aircraft structure and is configured to rotate about a pivot 38 to provide for movement of the RAT assembly 14 between the stowed position 16 and the deployed position 18. The generator housing 36 supports a generator (not shown) that is driven by the plurality of turbine blades 22. The example generator is disposed within the generator housing 36. The turbine blades 22 rotate in response to the airstream A along the outside of the aircraft structure 10 to drive the generator. As appreciated, although the example RAT assembly 14 is disclosed with a generator, the ram air turbine 20 could also drive any other device, such as a hydraulic pump for example. The RAT assembly 14 includes a release lever 40 configured to rotate about a pivot 38 attached to the generator housing 36.

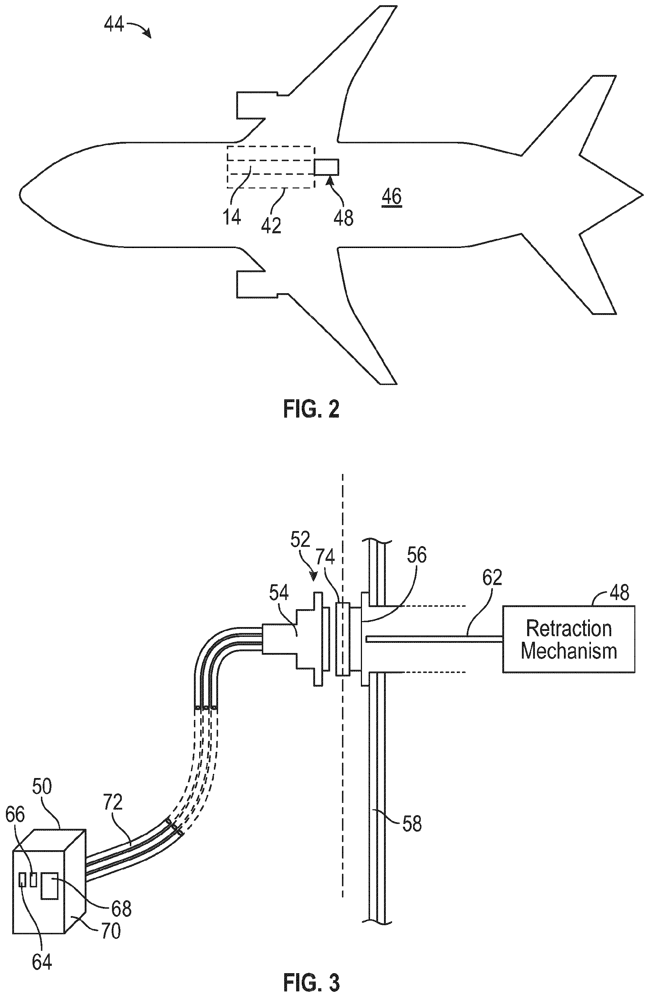

Referring now to FIG. 2, which is a schematic illustration of an embodiment of an aircraft 44, when in the stowed position the RAT assembly 14 is disposed in a RAT bay 42 of the aircraft 44, which in some embodiments is in a fuselage 46 of the aircraft 44. The RAT assembly 14 is operably connected to a retraction mechanism 48, such as a linear or rotary actuator, or the like, which is located in the fuselage 46.

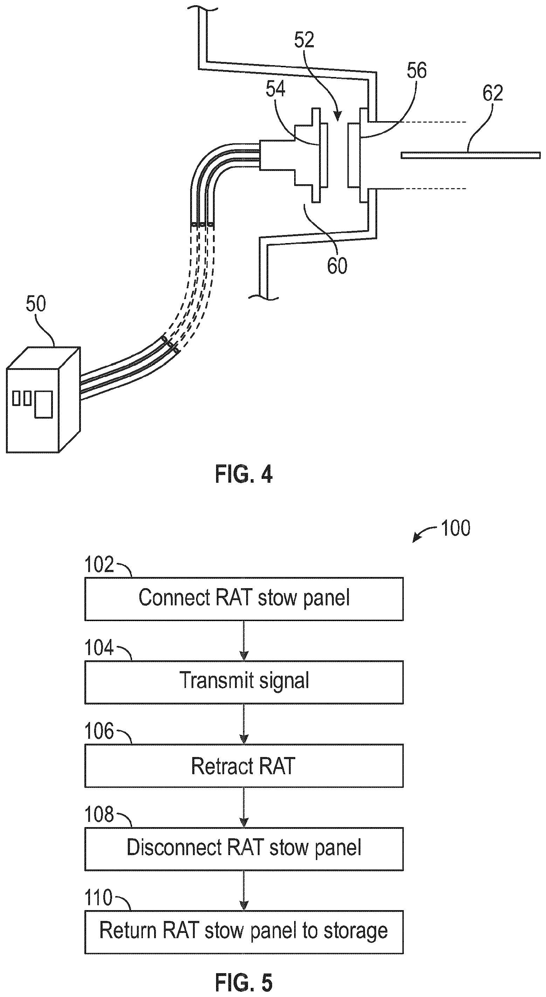

Referring now to FIG. 3, a RAT stow panel 50 is operably connected to the retraction mechanism 48 to signal the retraction mechanism 48 to retract the RAT assembly 14. The RAT stow panel 50 is a stand-alone piece of equipment not built into the aircraft 44, but is kept on the ground such in a maintenance tool storage or the like, and may be shared among several aircraft 44. When desired to retract the RAT assembly 14, the RAT stow panel 50 is operably connected to the retraction mechanism 48 via a stow connector 52, which includes a panel connector portion 54 which is part of the RAT stow panel 50. The stow connector 52 is configured to connect to an aircraft connector 56 located at the aircraft at, for example, an aircraft exterior surface 58 such as shown in FIG. 3, or alternatively recessed in a fuselage pocket 60 such as illustrated in FIG. 4. Further, in some embodiments the aircraft connector 56 is covered by a connector cover 74 to protect the aircraft connector 56 from contaminant or debris intrusion. The connector cover 74 may be attached to an aircraft structure, for example, the fuselage 46 or the aircraft connector 56 via, a cable, a string, a strap or another retention means.

Referring again to FIG. 3, the aircraft connector 56 is operably connected to the retraction mechanism 48 via a retraction lead 62 which is, for example, an electrical wire connection, a fiber optic connection or a hydraulic connection. The aircraft connector 56 is connected to the retraction mechanism 48 to transmit a retraction signal from the RAT stow panel 50 to the retraction mechanism 48 via the retraction lead 62.

The RAT stow panel 50 includes, in some embodiments, a power source 64, a signal transmitter 66 and a switch 68 contained in a panel housing 70. The switch 68 is connected to the power source 64 and the signal transmitter 66 such that when the switch 68 is activated the signal transmitter 66 transmits a stow signal along a panel lead 72 and through the stow connector 52 to the retraction mechanism 48 which then retracts or stows the RAT assembly 14 in the aircraft fuselage 46.

Referring now to FIG. 5, an exemplary method 100 of retracting a RAT assembly is illustrated. At step 102, the RAT stow panel 50 is connected to the retraction mechanism 48 via the aircraft connector 56 portion of the stow connector 52. At step 104, once connected, the RAT stow panel 50 is activated by, for example, the switch 68, and a stow signal is transmitted to the retraction mechanism 48. At step 106, once the stow signal is received at the retraction mechanism 48, the retraction mechanism 48 is activated and retracts the RAT assembly 14 into the stowed position. Once the RAT assembly 14 is retracted, the RAT stow panel 50 is then disconnected from the aircraft connector 56 at step 108, and in some embodiments is returned to maintenance tool storage or similar location at step 110.

Utilizing the stand-alone RAT stow panel 50 which is not part of the aircraft 44 is advantageous for a number of reasons including the ability to share one or two such devices among several aircraft, thus saving cost of procurement of the RAT stow panels 50. Further, removing the RAT stow panel 50 from the aircraft 44 and storing the device on the ground saves weight on the aircraft 44. Additionally, the RAT stow panel 50 may be simpler and more cost effective since airworthiness of the device is not required, and since the RAT stow panel 50 is not part of an aircraft system, the required design, development and certification effort would be reduced.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure. Therefore, it is intended that the present disclosure not be limited to the particular embodiment disclosed as the best mode contemplated for carrying out this present disclosure, but that the present disclosure will include all embodiments falling within the scope of the claims.

## Claims

1. A ram air turbine system of an aircraft, comprising:
a ram air turbine (20) selectably movable between a stowed position and an extended position at an aircraft;
a retraction mechanism (48) operably connected to the ram air turbine (20) and configured to selectably move the ram air turbine (20) from the extended position toward the stowed position; and
a stow panel separate from the aircraft and selectably connectible to the retraction mechanism (48), the stow panel configured to signal the retraction mechanism (48) to initiate movement of the ram air turbine (20) from the extended position.

2. The ram air turbine system of claim 1, further comprising a stow connector through which the stow panel is selectably connectible to the retraction mechanism (48), the stow connector including:
an aircraft connector portion disposed at the aircraft; and
a panel connector portion disposed at the stow panel and operably connectible to the aircraft connector portion.

3. The ram air turbine system of claim 2, wherein the aircraft connector portion is operably connected to the retraction mechanism (48) via a retraction lead.

4. The ram air turbine system of claim 2, wherein the aircraft connector portion is disposed at one of:
an exterior surface of an aircraft fuselage; or
a fuselage pocket of the aircraft fuselage.

5. The ram air turbine system of claim 2, further comprising a connector cover removably disposed over the aircraft connector portion, and optionally wherein the connector cover is attached to an aircraft structure using one of a cable, a string or a strap.

6. The ram air turbine system of any preceding claim, wherein the signal is one of an electrical signal, an optical signal, or a hydraulic signal.

7. The ram air turbine system of any preceding claim, wherein the stow panel includes at least:
a signal transmitter; and
a switch operably connected to the signal transmitter such that when the switch is activated the signal transmitter transmits the signal, and optionally wherein the stow panel further includes a power source operably connected to the switch and the signal transmitter.

8. The ram air turbine system of claim 1, wherein the ram air turbine is configured to be moved from the extended position to the stowed position.

9. An aircraft, comprising:
an aircraft fuselage;
the ram air turbine system of claim 1;
the ram air turbine system being disposed at the aircraft fuselage;
and
an aircraft connector portion disposed at the aircraft fuselage configured to be selectably connectible to the stow panel separate from the aircraft.

10. The aircraft of claim 9, wherein the aircraft connector portion is operably connected to the retraction mechanism (48) via a retraction lead.

11. The aircraft of claim 9 or 10, wherein the aircraft connector portion is disposed at one of:
an exterior surface of an aircraft fuselage; or
a fuselage pocket of the aircraft fuselage.

12. The aircraft of any of claims 9 to 11, wherein the retraction mechanism (48) is configured to receive a signal from the stow panel via the aircraft connector portion to initiate movement of the ram air turbine (20) from the extended position, and optionally . wherein the signal is one of an electrical signal, an optical signal, or a hydraulic signal.

13. The aircraft of any of claims 9 to 12, further comprising a connector cover removably disposed over the aircraft connector portion, and optionally wherein the connector cover is attached to an aircraft structure using one of a cable, a string or a strap.

14. A method of operating a ram air turbine system of an aircraft, comprising:
connecting a stow panel separate from the aircraft to a retraction mechanism (48) disposed at the aircraft and operably connected to a ram air turbine (20);
transmitting a signal from the stow panel to the retraction mechanism (48) via the connection; and
initiating operation of the retraction mechanism (48) in response to receiving the signal to retract the ram air turbine (20) from the extended position toward the stowed position.

15. The method of claim 14, further comprising removing the stow panel from connection with the retraction mechanism (48) after the ram air turbine (20) reaches the stowed position, and/or wherein the signal is transmitted by activation of a switch at the stow panel.

## Patentansprüche

1. Stauluftturbinensystem eines Luftfahrzeugs, umfassend:
eine Stauluftturbine (20), die wahlweise zwischen einer verstauten Position und einer ausgefahrenen Position an einem Luftfahrzeug beweglich ist;
einen Einfahrmechanismus (48), der mit der Stauluftturbine (20) wirkverbunden und dazu konfiguriert ist, die Stauluftturbine (20) wahlweise aus der ausgefahrenen Position in Richtung der verstauten Position zu bewegen; und
eine von dem Luftfahrzeug getrennte und wahlweise mit dem Einfahrmechanismus (48) verbindbare Verstautafel, wobei die Verstautafel dazu konfiguriert ist, dem Einfahrmechanismus (48) zu signalisieren, eine Bewegung der Stauluftturbine (20) aus der ausgefahrenen Position einzuleiten.

2. Stauluftturbinensystem nach Anspruch 1, ferner umfassend einen Verstauverbinder, durch den die Verstautafel wahlweise mit dem Einfahrmechanismus (48) verbindbar ist, wobei der Verstauverbinder Folgendes beinhaltet:
ein an dem Luftfahrzeug angeordnetes Luftfahrzeugverbinderteil; und
ein an der Verstautafel angeordnetes und mit dem Luftfahrzeugverbinderteil wirkverbindbares Tafelverbinderteil.

3. Stauluftturbinensystem nach Anspruch 2, wobei das Luftfahrzeugverbinderteil über eine Einfahrleitung mit dem Einfahrmechanismus (48) wirkverbunden ist.

4. Stauluftturbinensystem nach Anspruch 2, wobei das Luftfahrzeugverbinderteil an einem der Folgenden angeordnet ist:
einer Außenfläche eines Luftfahrzeugrumpfes; oder
einer Rumpfaussparung des Luftfahrzeugrumpfes.

5. Stauluftturbinensystem nach Anspruch 2, ferner umfassend eine abnehmbar über dem Luftfahrzeugverbinderteil angeordnete Verbinderabdeckung und wobei die Verbinderabdeckung optional unter Verwendung eines Kabels, einer Schnur oder eines Gurts an einer Luftfahrzeugkonstruktion angebracht ist.

6. Stauluftturbinensystem nach einem der vorhergehenden Ansprüche, wobei es sich bei dem Signal um eines von einem elektrischen Signal, einem optischen Signal oder einem hydraulischen Signal handelt.

7. Stauluftturbinensystem nach einem der vorhergehenden Ansprüche, wobei die Verstautafel mindestens Folgendes beinhaltet:
einen Signalgeber; und
einen Schalter, der derart mit dem Signalgeber wirkverbunden ist, dass der Signalgeber das Signal überträgt, wenn der Schalter aktiviert ist, und wobei die Verstautafel optional ferner eine mit dem Schalter und dem Signalgeber wirkverbundene Stromquelle beinhaltet.

8. Stauluftturbinensystem nach Anspruch 1, wobei die Stauluftturbine dazu konfiguriert ist, aus der ausgefahrenen Position in die verstaute Position bewegt zu werden.

9. Luftfahrzeug, umfassend:
einen Luftfahrzeugrumpf;
das Stauluftturbinensystem nach Anspruch 1;
wobei das Stauluftturbinensystem an dem Luftfahrzeugrumpf angeordnet ist; und
ein an dem Luftfahrzeugrumpf angeordnetes Luftfahrzeugverbinderteil, das dazu konfiguriert ist, wahlweise mit der von dem Luftfahrzeug getrennten Verstautafel verbindbar zu sein.

10. Luftfahrzeug nach Anspruch 9, wobei das Luftfahrzeugverbinderteil über eine Einfahrleitung mit dem Einfahrmechanismus (48) wirkverbunden ist.

11. Luftfahrzeug nach Anspruch 9 oder 10, wobei das Luftfahrzeugverbinderteil an einem der Folgenden angeordnet ist:
einer Außenfläche eines Luftfahrzeugrumpfes; oder
einer Rumpfaussparung des Luftfahrzeugrumpfes.

12. Luftfahrzeug nach einem der Ansprüche 9 bis 11, wobei der Einfahrmechanismus (48) dazu konfiguriert ist, über das Luftfahrzeugverbinderteil ein Signal von der Verstautafel zu empfangen, um eine Bewegung der Stauluftturbine (20) aus der ausgefahrenen Position einzuleiten, und wobei es sich bei dem Signal optional um eines von einem elektrischen Signal, einem optischen Signal oder einem hydraulischen Signal handelt.

13. Luftfahrzeug nach einem der Ansprüche 9 bis 12, ferner umfassend eine abnehmbar über dem Luftfahrzeugverbinderteil angeordnete Verbinderabdeckung und wobei die Verbinderabdeckung optional unter Verwendung eines Kabels, einer Schnur oder eines Gurts an einer Luftfahrzeugkonstruktion angebracht ist.

14. Verfahren zum Betreiben eines Stauluftturbinensystems eines Luftfahrzeugs, umfassend:
Verbinden einer von dem Luftfahrzeug getrennten Verstautafel mit einem an dem Luftfahrzeug angeordneten und mit einer Stauluftturbine (20) wirkverbundenen Einfahrmechanismus (48);
Übertragen eines Signals von der Verstautafel an den Einfahrmechanismus (48) über die Verbindung; und
Einleiten eines Betriebs des Einzugsmechanismus (48) als Reaktion auf Empfangen des Signals zum Einfahren der Staudruckturbine (20) aus der ausgefahrenen Position in Richtung der verstauten Position.

15. Verfahren nach Anspruch 14, ferner umfassend Trennen der Verstautafel von der Verbindung mit dem Einfahrmechanismus (48), nachdem die Stauluftturbine (20) die Verstauposition erreicht hat, und/oder wobei das Signal durch Aktivierung eines Schalters an der Verstautafel übertragen wird.

## Revendications

1. Système de turbine à air dynamique, comprenant :
une turbine à air dynamique (20) pouvant être déplacée de manière sélective entre une position rangée et une position étendue sur un aéronef ;
un mécanisme de rétraction (48) connecté de manière fonctionnelle à la turbine à air dynamique (20) et configuré pour déplacer de manière sélective la turbine à air dynamique (20) de la position étendue vers la position rangée ; et
un panneau de rangement séparé de l'aéronef et pouvant être connecté de manière sélective au mécanisme de rétraction (48), le panneau de rangement étant configuré pour signaler au mécanisme de rétraction (48) d'initier le déplacement de la turbine à air dynamique (20) à partir de la position étendue.

2. Système de turbine à air dynamique selon la revendication 1, comprenant en outre un connecteur de rangement par lequel le panneau de rangement peut être connecté de manière sélective au mécanisme de rétraction (48), le connecteur de rangement comportant :
une partie de connecteur d'aéronef disposée au niveau de l'aéronef ; et
une partie de connecteur de panneau disposée au niveau du panneau de rangement et pouvant être connectée de manière fonctionnelle à la partie de connecteur d'aéronef.

3. Système de turbine à air dynamique selon la revendication 2, dans lequel la partie de connecteur d'aéronef est connectée de manière fonctionnelle au mécanisme de rétraction (48) par l'intermédiaire d'un câble de rétraction.

4. Système de turbine à air dynamique selon la revendication 2, dans lequel la partie de connecteur d'aéronef est disposée au niveau de l'un des emplacements suivants :
une surface extérieure du fuselage d'aéronef ; ou
une poche de fuselage du fuselage d'aéronef.

5. Système de turbine à air dynamique selon la revendication 2, comprenant en outre un couvercle de connecteur disposé de manière amovible sur la partie de connecteur d'aéronef, et dans lequel éventuellement le couvercle de connecteur est fixé à une structure d'aéronef en utilisant l'un ou l'une d'un câble, d'une corde ou d'une sangle.

6. Système de turbine à air dynamique selon une quelconque revendication précédente, dans lequel le signal est l'un d'un signal électrique, d'un signal optique ou d'un signal hydraulique.

7. Système de turbine à air dynamique selon une quelconque revendication précédente, dans lequel le panneau de rangement comporte au moins :
un émetteur de signal ; et
un interrupteur connecté de manière fonctionnelle à l'émetteur de signal de sorte que lorsque l'interrupteur est activé,
l'émetteur de signal transmet le signal, et dans lequel éventuellement le panneau de rangement comporte en outre une source d'alimentation connectée de manière fonctionnelle à l'interrupteur et à l'émetteur de signal.

8. Système de turbine à air dynamique selon la revendication 1, dans lequel la turbine à air dynamique est configurée pour être déplacée de la position étendue à la position rangée.

9. Aéronef, comprenant :
un fuselage d'aéronef ;
le système de turbine à air dynamique selon la revendication 1 ;
le système de turbine à air dynamique étant disposé au niveau du fuselage d'aéronef ; et
une partie de connecteur d'aéronef disposée au niveau du fuselage d'aéronef et configurée de façon à pouvoir être connectée de manière sélective au panneau de rangement séparé de l'aéronef.

10. Aéronef selon la revendication 9, dans lequel la partie de connecteur d'aéronef est connectée de manière fonctionnelle au mécanisme de rétraction (48) par l'intermédiaire d'un câble de rétraction.

11. Aéronef selon la revendication 9 ou la revendication 10, dans lequel la partie de connecteur d'aéronef est disposée au niveau de l'un des emplacements suivants :
une surface extérieure du fuselage d'aéronef ; ou
une poche de fuselage du fuselage d'aéronef.

12. Aéronef selon l'une quelconque des revendications 9 à 11, dans lequel le mécanisme de rétraction (48) est configuré pour recevoir un signal à partir du panneau de rangement par l'intermédiaire de la partie de connecteur d'aéronef afin d'initier le déplacement de la turbine à air dynamique (20) à partir de la position étendue, et dans lequel éventuellement le signal est l'un d'un signal électrique, d'un signal optique ou d'un signal hydraulique.

13. Aéronef selon l'une quelconque des revendications 9 à 12, comprenant en outre un couvercle de connecteur disposé de manière amovible sur la partie de connecteur d'aéronef, et dans lequel éventuellement le couvercle de connecteur est fixé à une structure d'aéronef en utilisant l'un ou l'une d'un câble, d'une corde ou d'une sangle.

14. Procédé de fonctionnement d'un système de turbine à air dynamique d'un aéronef, comprenant :
la connexion d'un panneau de rangement séparé de l'aéronef à un mécanisme de rétraction (48) disposé au niveau de l'aéronef et connecté de manière fonctionnelle à une turbine à air dynamique (20) ;
la transmission d'un signal du panneau de rangement au mécanisme de rétraction (48) par l'intermédiaire de la connexion ; et
l'initiation du fonctionnement du mécanisme de rétraction (48) en réponse à la réception du signal pour rétracter la turbine à air dynamique (20) de la position étendue vers la position rangée.

15. Procédé selon la revendication 14, comprenant en outre le retrait du panneau de rangement de la connexion avec le mécanisme de rétraction (48) après que la turbine à air dynamique (20) a atteint la position rangée, et/ou dans lequel le signal est transmis par l'activation d'un interrupteur au niveau du panneau de rangement.
